# EUROPÄISCHE PATENTSCHRIFT

(11) **EP 0 765 253 B1**
(45) Veröffentlichungstag und Bekanntmachung des Hinweises auf die Patenterteilung: **06.05.1998**
(21) Anmeldenummer: 95922405.6
(22) Anmeldetag: 21.06.1995
(51) Int. Cl.: B60P 3/00, E02F 9/02, E02F 9/08, E02F 7/04

(54) **KONTROLLFAHRZEUG FÜR DEPONIEN UND KONTAMINIERTE BEREICHE**
INSPECTION VEHICLE FOR WASTE TIPS AND CONTAMINATED AREAS
VEHICULE D'INSPECTION POUR DECHARGES DE DECHETS ET ZONES CONTAMINEES

(30) Priorität: 24.06.1994 DE 9410041 U
(43) Veröffentlichungstag der Anmeldung: 02.04.1997
(73) Patentinhaber: SEG Umwelt-Service GmbH, D-66693 Mettlach (DE)
(72) Erfinder: WELTER, Hubert, D-66693 Mettlach (DE); WALTER, Hans-Peter, D-66693 Mettlach (DE)
(74) Vertreter: Vièl, Christof, Dipl.-Ing.
(86) Internationale Anmeldenummer: DE9500780
(87) Internationale Veröffentlichungsnummer: WO9600155

(56) Entgegenhaltungen:
- EP-A- 0 219 469
- EP-A- 0 248 322
- EP-A- 0 440 488
- EP-A- 0 569 348
- CH-A- 368 431
- DE-A- 2 303 685
- DE-A- 2 551 401
- DE-A- 4 234 045
- DE-U- 9 214 412
- DE-U- 9 315 876
- FR-A- 2 675 831
- GB-A- 1 179 382
- US-A- 3 865 208
- US-A- 4 379 565
- US-A- 4 439 218
- US-A- 4 530 620
- US-A- 5 291 746

## Beschreibung

Die Erfindung betrifft ein Kontrollfahrzeug für Deponien und kontaminierte Bereiche.

Auf Mülldeponien wird bei der Anlieferung Von Deponiegut eine sogenannte Reststoff- / Abfallkontrolle durchgeführt. Im Rahmen dieser Kontrolle werden die angelieferten Reststoffe im Eingangsbereich der Deponie einer oberflächlichen Sichtkontrolle hinsichtlich ihrer Qualität unterzogen und die schriftliche Deklaration der Quantität am Wägehaus überprüft.

Die Sichtkontrolle ist bei Anlieferung von überschaubaren Kleinmengen noch relativ gut durchführbar, bei Großanlieferungen zwischen 5 und 40 m³ ist jedoch eine korrekte und für die Betriebsleitung transparente, nachvollziehbare Kontrolle nicht mehr möglich.

Die Praxis hat gezeigt, daß auf diese Art und Weise nicht zugelassene Reststoffe/Abfälle unbemerkt die Eingangskontrolle bewußt oder unbewußt in kleinen und großen Mengen passieren können.

Dieses unerlaubte Ablagern wurde von den Deponiebetreibern erkannt und am Ort des Entladens eine Schüttkontrolle eingeführt. Auch diese Überprüfung der entladenen Abfälle kann vom Personal auf dem Deponiekörper nur unzureichend und oberflächlich wahrgenommen werden.

Dies liegt unter anderem an den Arbeitsbedingungen des Kontrollpersonals. Auf dem "Deponiekörper" werden im Sommer Temperaturen von über 40 ° C erreicht, Schatten ist in der Regel nicht vorhanden. Gleichzeitig liegt eine enorme Staubemission vor und übelriechende bis ekelerregende Gerüche sind zu ertragen. In der nassen und kalten Jahreszeit sind erhöhte Ausfälle durch Krankheit die Regel.

Auch werden häufig MAK-Werte um ein Vielfaches der zulässigen Konzentration überschritten.

Unfälle, wie Knochenbrüche, Fleischwunden sind aufgrund der unebenen Deponieoberfläche, deponierter spitzer Gegenstände, herabfallenden Materials häufig. Werterhin besteht eine Gefährdung durch rückwärtsfahrende Lkws.

Aus den vorgenannten Gründen wird ersichtlich, daß qualifiziertes Personal an dieser Arbeitsstätte nur sehr kurz bzw. nicht einzusetzen ist. Eine hohe Personalfluktuation mit abnehmender Qualifikation stellt sich ein. Gleichzeitig nimmt auch die Qualität der Kontrollen ab und es kommt vermehrt zur Deponierung von nicht zugelassenen Reststoffen.

Der Erfindung liegt somit die Aufgabe zugrunde, ein Kontrollfahrzeug für Deponien und kontaminierte Bereiche zu entwickeln, das auf einer Deponie mit häufig weichem Untergrund führen kann und das einem "Schüttkontrolleur" eine effektive Schüttkontrolle unter sicheren und humanen Arbeitsbedingungen ermöglicht.

Diese Aufgabe wird erfindungsgemäß dadurch gelöst, daß das Kontrollfahrzeug einen Allradantrieb aufweist, daß ein Kontrollarm und eine klimatisierte Schutz-Belüftungs-Fahrerkabine mit einer Aktivkohle-Luftfiltereinrichtung vorgesehen ist und daß Mittel zum Übertragen von Daten in das Fahrzeug und Mittel zum Anzeigen der Daten innerhalb der Fahrerkabine vorgesehen sind.

Mit einem derartigen Fahrzeug kann der Schüttkontrolleur alle Bereiche der Deponie befahren, mit dem Kontrollarm einen Schüttguthaufen untersuchen und z.B. Proben nehmen oder Wertstoffe in die Sammelbehälter aussortieren. Außerdem wird durch die klimatisierte Schutz-Belüftungs-Fahrerkabine hohe Temperaturen vermieden und die Geruchsbelastung gering gehalten.

Eine Ausbildung der Erfindung besteht darin, daß der Kontrollarm ein bewegliches Greifwerkzeug aufweist.

Mit dem beweglichen Greifwerkzeug kann der Schüttgutkontrolleur einen Schüttguthaufen untersuchen und z.B. Proben nehmen.

Es liegt im Rahmen der Erfindung, daß der Kontrollarm und die Fahrerkabine drehbar auf dem Fahrgestell des Kontrollfahrzeuges vorgesehen sind, wobei der Antrieb des Kontrollfahrzeugs und seiner Aggregate nicht in den drehbaren Bereich integriert ist.

Durch die Trennung von Antrieb und Fahrerkabine wird der Geräuschpegel in der Fahrerkabine gering gehalten.

Es ist vorteilhaft, daß das Kontrollfahrzeug eine Feuerlöscheinrichtung aufweist.

Mit einer derartigen Feuerlöscheinrichtung können Deponiebrände noch im Zeitpunkt ihres Entstehens bekämpft werden.

Eine Ausbildung der Erfindung besteht darin, daß das Kontrollfahrzeug einen oder mehrere Sammelbehälter aufweist.
Dadurch wird des dem Schüttgutkontrolleur ermöglicht, Wertstoffe in die Sammelbehälter auszusortieren.

Es ist erfindungsgemäß, daß mindestens ein Sammelbehälter verschließbar ist.

Es ist vorgesehen, daß mindestens ein Sammelbehälter luftdicht verschließbar ist.

Es liegt im Rahmen der Erfindung, daß der luftdicht verschließbare Sammelbehälter beheiz- und/oder kühlbar ist.

Weiterhin kann es sinnvoll sein, daß das Kontrollfahrzeug eine Notrettungseinrichtung aufweist.

Erfindungsgemäß ist auch, daß das Fahrzeug eine Emissionsmeßeinrichtung aufweist.

Es ist vorteilhaft, daß das Kontrollfahrzeug ein Knicklader ist und daß eine Hydraulik für die Übertragung der Antriebsenergie auf alle Räder vorgesehen ist.

Erfindungsgemäß ist, daß die Räder des Kontrollfahrzeugs Stahlkompaktorräder sind.

Vorteilhaft ist, daß die Ansaughaube für die Motorkühlluft selbstreinigend ist.

Schließlich ist es sinnvoll, daß Mittel zum Bearbeiten der Daten und zum Übertragen der Daten aus dem Fahrzeug vorgesehen sind.

Im folgenden wird ein Beispiel eines erfindungsgemäßen Kontrollfahrzeugs anhand einer Zeichnung beschrieben.

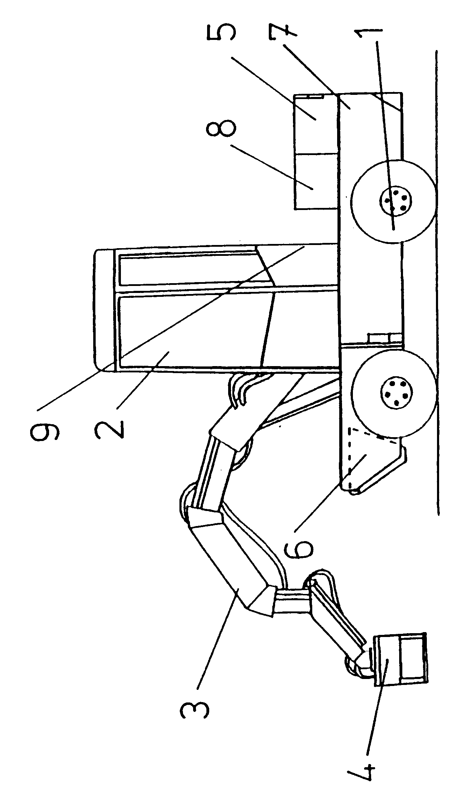

Die Zeichnung zeigt eine schematische Darstellung der Seitenansicht des Kontrollfahrzeugs. Das Kontrollfahrzeug weist ein deponiegeeignetes Fahrgestell 1 mit Allradantrieb auf, z.B. kann es sich um einen Knicklader handeln, bei dem eine Hydraulik für die Übertragung der Antriebsenergie auf alle Räder vorgesehen ist. Diese Antriebsvariante ist deshalb von Vorteil, weil sie keine Kardanwelle erfordert, um die sich beispielsweise Textilien wickeln können, was den Wartungsaufwand wesentlich erhöht. Zweckmäßigerweise sind die Räder des Kontrollfahrzeugs als Stahlkompaktorräder ausgeführt, d.h. gänzlich oder zumindest teilweise aus Stahl bestehen. Hierdurch wird das Fahrzeuggewicht und somit die Kompaktierkraft des Kontrollfahrzeugs erhöht, zudem sind derartige Räder extrem widerstandsfähig.

Auf dem Fahrgestell 1 des Kontrollfahrzeugs sind eine Fahrerkabine 2 und ein Kontrollarm 3 mit einem Greitwerkzeug 4, z.B. einer Doppelschale, drehbar vorgesehen. Der Antrieb 5 des Kontrollfahrzeuges ist nicht in den drehbaren Bereich, der die Fahrerkabine 2 und den Kontrollarm 3 umfaßt, angeordnet, sondern getrennt davon, um den Geräuschpegel in der Fahrerkabine 2 gering zu halten.

Zur Zwischenlagerung von aufgefundenen Wertstoffen und zur Aufnahme großvolumiger Abfallstoffe, wie z.B. Kühlgeräte, Waschmaschinen, Altreifen, Fässer ist mindestens ein Sammelbehälter 6 am Kontrollfahrzeug, z.B. im vorderen Bereich des Kontrollfahrzeugs, vorgesehen. Dabei ist es sinnvoll, daß der Sammelbehälter 6 abgenommen und entleert werden kann, was z.B. mit dem Greifwerkzeug 4 durchführbar ist, ohne daß Hilfspersonal erforderlich ist und ohne daß der Fahrer das Kontrollfahrzeug verlassen muß.

Ein weiterer Sammelbehälter 7, der verschließbar sein sollte, kann z.B. Zwischenlagerung von aufgefundenen toxischen Stoffen verwendet werden.

Schließlich kann noch ein weiterer Sammelbehälter 8 vorgesehen sein, der luftdicht verschließbar und eventuell auch beheiz- und/oder kühlbar ist und der zur Aufbewahrung von Proben dient.

Zur sofortigen Bekämpfung von entstehenden Deponiebränden und auch als Schutz des Fahrers kann an dem Fahrzeug, beispielsweise im Bereich des Kontrollarms 3 eine Feuerlöscheinrichtung vorgesehen sein.

Weiterhin ist es sinnvoll, daß das Fahrzeug über eine Notrettungseinrichtung verfügt, die den Fahrer über einen bestimmten Zeitraum mit Sauerstoff versorgen kann.

Zur Kontrolle der MAK-Werte und zur Beweissicherung kann auch eine Emissionsmeßeinrichtung 9 vorgesehen sein.

Es ist sinnvoll, daß die Fahrerkabine 2 klimatisiert und als Schutz-Belüftungs-Kabine ausgebildet ist, d.h. daß ein geringer Überdruck in der Kabine das Eindringen von z.B. toxischen Stoffen in die Fahrerkabine 2 verhindert. Die der Fahrerkabine 2 zugeführte Luft kann über eine Aktivkohle-Luftfiltereinrichtung gefiltert und dadurch von Gerüchen im wesentlichen befreit werden. Aufgrund des in der Regel erheblichen Staubaufkommens in Deponiebereichen ist es sinnvoll, daß die Ansaughaube für die Motorkühlluft selbstreinigend ist. Dies kann dadurch erreicht werden, daß die Ansaughaube mit einem Feinstsieb ausgestattet ist, welches sich vor dem Motorkühlluftansaugschacht befindet. Das Feinstsieb wird dann mit aus Preßlufttanks durch Düsenrohre geführte Preßluft schlagartig gereinigt.

Durch einen derartig angenehm gestalteten Arbeitsplatz kann durch qualifiziertes Personal eine effektive Identitätskontrolle der entladenen Reststoffmengen ordnungsgemäß durchgehführt werden. Der Betreiber einer Deponie kann somit die geforderte Abfallkontrolle wieder aufrechterhalten und einen Beitrag zum Umweltschutz leisten.

Es ist zweckmäßig, daß Daten z.B. betreffend den deklarierten Inhalt einer Deponiecharge in das Kontrollfahrzeug übertragen werden können und daß ebenfalls eine Übertragung von Daten aus dem Kontrollfahrzeug z.B. an eine Leitstelle möglich ist. Dabei ist auch denkbar, daß die (Soll-)Daten der Leitstelle in dem Fahrzeug gespeichert und mit den vor Ort ermittelten (Ist-)Daten verglichen werden.

Besondere Vorkommnisse, wie falsche Deklaration, unerlaubte Abladevorgänge etc. können eventuell durch Bilddokumentation mit einer Kamera festgehalten werden. Auch eine Funkverbindung mit der Leitstelle ist sicher zweckmäßig.

## Patentansprüche

1. Kontrollfährzeug für Deponien und kontaminierte Bereiche, **dadurch gekennzeichnet,** daß das Kontrollfahrzeug einen Allradantrieb aufweist, daß ein Kontrollarm (3) und eine klimatisierte Schutz-Belüftungs-Fahrerkabine (2) mit einer Aktivkohle-Luftfiltereinrichtung vorgesehen ist und daß Mittel zum Übertragen von Daten in das Fahrzeug und Mittel zum Anzeigen der Daten innerhalb der Fahrerkabine (2) vorgesehen sind.

2. Kontrollfahrzeug gemäß Anspruch 1, **dadurch gekennzeichnet**, daß der Kontrollarm (3) ein bewegliches Greifwerkzeug (4) aufweist.

3. Kontrollfahrzeug gemäß Anspruch 1, **dadurch gekennzeichnet**, daß der Kontrollarm (3) und die Fahrerkabine (2) drehbar auf dem Fahrgestell (1) des Kontrollfahrzeugs vorgesehen sind, wobei der Antrieb (5) des Kontrollfahrzeugs und seiner Aggregate nicht in den drehbaren Bereich (2, 3, 4) integriert ist.

4. Kontrollfahrzeug gemaß Anspruch 1, **dadurch gekennzeichnet,** daß das Kontrollfahrzeug eine Feuerlöscheinrichtung aufweist.

5. Kontrollfahrzeug gemäß Anspruch 1, **dadurch gekennzeichnet,** daß das Kontrollfahrzeug einen oder mehrere Sammelbehälter (6, 7, 8) aufweist.

6. Kontrollfahrzeug gemäß Anspruch 5, **dadurch gekennzeichnet**, daß mindestens ein Sammelbehälter (7, 8) verschließbar ist.

7. Kontrollfahrzeug gemaß Anspruch 6, **dadurch gekennzeichnet**, daß mindestens ein Sammelbehälter (8) luftdicht verschließbar ist.

8. Kontrollfahrzeug gemäß Anspruch 7, **dadurch gekennzeichnet**, daß der luftdicht verschließbare Sammelbehälter (8) beheiz- und/oder kühlbar ist.

9. Kontrollfahrzeug gemäß Anspruch 1, **dadurch gekennzeichnet,** daß das Kontrollfahrzeug eine Notrettungseinrichtung aufweist.

10. Kontrollfahrzeug gemäß Anspruch 1, **dadurch gekennzeichnet,** daß das Kontrollfahrzeug eine Emissionsmeßeinrichtung (9) aufweist.

11. Kontrollfahrzeug gemäß Anspruch 1, **dadurch gekennzeichnet**, daß das Kontrollfahrzeug ein Knicklader ist und daß eine Hydraulik für die Übertragung der Antriebsenergie auf alle Räder vorgesehen ist.

12. Kontrollfahrzeug gemäß Anspruch 1, **dadurch gekennzeichnet**, daß die Räder des Kontrollfahrzeugs Stahlkompaktorräder sind.

13. Kontrollfahrzeug gemäß Anspruch 1, **dadurch gekennzeichnet**, daß eine selbstreinigende Ansaughaube für die Motorkhühlluft vorgesehen ist.

14. Kontrollfahrzeug gemäß Anspruch 1, **dadurch gekennzeichnet**, daß Mittel zum Bearbeiten von Daten und zum Übertragen von Daten aus dem Fahrzeug vorgesehen sind.

## Claims

1. An inspection vehicle for waste dumps and contaminated areas, **characterized in that** the inspection vehicle has an all-wheel drive, that an arm (3) and an air-conditioned, protectively ventilated driver's cab (2) with an activated-charcoal air-filtering device are provided, and that means are provided for transmitting data into the vehicle and for displaying said data inside the driver's cab (2).

2. The inspection vehicle of claim 1, **characterized in that** the arm (3) has a movable gripping device (4).

3. The inspection vehicle of claim 1, **characterized in that** the arm (3) and the driver's cab (2) are rotatable on the chassis (1) of the inspection vehicle, the inspection vehicle's drive (5) and the drive units being integrated outside the slewing range (2,3,4).

4. The inspection vehicle of claim 1, **characterized in that** the inspection vehicle is provided with a fire-extinguishing device.

5. The inspection vehicle of claim 1, **characterized in that** the inspection vehicle is provided with one or more collecting vessels (6,7,8)

6. The inspection vehicle of claim 5, **characterized in that** at least one collecting vessel (7,8) can be sealed.

7. The inspection vehicle of claim 6, **characterized in that** at least one collecting vessel (8) can be hermetically sealed.

8. The inspection vehicle of claim 7, **characterized in that** the hermetically sealable collecting vessel (8) can be heated and/or cooled.

9. The inspection vehicle of claim 1, **characterized in that** the inspection vehicle is provided with an emergency-rescue device.

10. The inspection vehicle of claim 1, **characterized in that** the inspection vehicle is provided with an emissions-measuring device (9).

11. The inspection vehicle of claim 1, **characterized in that** the inspection vehicle is an articulated loader and that a hydraulic system is provided for transmitting the drive energy to all the wheels.

12. The inspection vehicle of claim 1, **characterized in that** the wheels of the inspection vehicle are compact steel wheels.

13. The inspection vehicle of claim 1, **characterized in that** a self-cleaning air-intake hood is provided for the engine cooling air.

14. The inspection vehicle of claim 1, **characterized in that** means are provided for processing data and for transmitting data out of the vehicle.

## Revendications

1. Véhicule de contrôle pour décharges et zones contaminées, **caractérisé en ce que** le véhicule de contrôle est un véhicule toutes roues motrices, en ce qu'il est prévu un bras de contrôle (3) et une cabine de pilotage (2) climatisée et à aération protégée équipée d'un dispositif de purification d'air au charbon actif et en ce qu'il est prévu des moyens pour la transmission de données dans le véhicule et des moyens pour afficher ces données dans la cabine de pilotage (2).

2. Véhicule de contrôle selon la revendication 1, **caractérisé en ce que** le bras de contrôle (3) est équipé d'un outil de préhension (4) mobile.

3. Véhicule de contrôle selon la revendication 1, **caractérisé en ce que** le bras de contrôle (3) et la cabine de pilotage (2) peuvent pivoter sur le chassis (1) du véhicule de contrôle, l'entraînement du véhicule de contrôle et ses aggrégats ne faisant pas partie du domaine pivotant.

4. Véhicule de contrôle selon la revendication 1, **caractérisé en ce que** le véhicule de contrôle est équipé d'un dispositif d'extinction des incendies.

5. Véhicule de contrôle selon la revendication 1, **caractérisé en ce que** le véhicule de contrôle est équipé d'un ou plusieurs conteneurs (6, 7, 8).

6. Véhicule de contrôle selon la revendication 5, **caractérisé en ce qu**'au moins un des conteneurs (7, 8) peut être fermé.

7. Véhicule de contrôle selon la revendication 6, **caractérisé en ce qu**'au moins un des conteneurs (8) peut être fermé hermétiquement.

8. Véhicule de contrôle selon la revendication 7, **caractérisé en ce que** le conteneur (8) fermé hermétiquement peut être chauffé ou refroidi.

9. Véhicule de contrôle selon la revendication 1, **caractérisé en ce que** le véhicule de contrôle est équipé d'un dispositif de secours d'urgence.

10. Véhicule de contrôle selon la revendication 1, **caractérisé en ce que** le véhicule de contrôle est équipé d'un dispositif de mesure des émissions (9).

11. Véhicule de contrôle selon la revendication 1, **caractérisé en ce que** le véhicule de contrôle est un véhicule articulé et en ce qu'un système hydraulique est prévu pour la transmission de l'énergie d'entraînement à toutes les roues.

12. Véhicule de contrôle selon la revendication 1, **caractérisé en ce que** les roues du véhicule de contrôle sont des roues de compactage en acier.

13. Véhicule de contrôle selon la revendication 1, **caractérisé en ce qu**'il est prévu un capot d'aspiration autonettoyant pour l'air de refroidissement du moteur.

14. Véhicule de contrôle selon la revendication 1, **caractérisé en ce qu**'il est prévu des moyens pour le traîtement de données et la transmission de données depuis le véhicule.
